# EUROPÄISCHE PATENTANMELDUNG

(11) **EP 1 462 768 A2**
(43) Veröffentlichungstag der Anmeldung: **29.09.2004**
(21) Anmeldenummer: 04006300.0
(22) Anmeldetag: 17.03.2004
(51) Int. Cl.: G01D 3/08

(54) **Brückenschaltung zur Abfrage eines Schalters**

(30) Priorität: 29.03.2003 DE 10314261
(71) Anmelder: Aufzugswerke M. Schmitt & Sohn GmbH & Co., 90402 Nürnberg (DE)
(72) Erfinder: Salomon, Thorsten, 04808 Wurzen (DE); Rahnemai-Hosseinpour, Thomas, 12357 Berlin (DE)
(74) Vertreter: Zinsinger, Norbert

(57) **Zusammenfassung**

Es wird eine Brückenschaltung (10) zur Abfrage der Schaltstellung (Aus/Ein) eines Schalters (58) und zur Feststellung eines eventuell auftretenden Fehlers der Brückenschaltung (10) beschrieben. Die Brückenschaltung (10) weist einen Mikrocontroller (12) mit einem ersten Ausgang (14) und einem zugehörigen ersten Eingang (18) sowie einen zweiten Ausgang (16) und einen zugehörigen zweiten Eingang (20) auf. Der erste Ausgang (14) ist mit einem ersten Eingang (22) eines ersten Verstärkers (24) und der zweite Ausgang (16) ist mit einem ersten Eingang (28) eines invertiert betriebenen zweiten Verstärkers (30) zusammengeschaltet. Der erste und der zweite Verstärker (24, 30) weisen jeweils einen zweiten Eingang (32, 34) auf, die an voneinander verschiedenen Referenzgleichspannungen angeschlossen sind. Jeder der beiden Verstärker (24, 30) ist ausgangsseitig an eine zugehörige Klemme (54, 56) für den abzufragenden Schalter (58) angeschlossen. Jedem Verstärker (24, 30) ist ein Optokoppler (48, 52) zugeordnet, wobei die jeweilige Fotodiode (42, 44) an der Ausgangsseite des entsprechenden Verstärkers (24, 30) geschaltet und der zugehörige Fototransistor (46, 50) an den entsprechenden ersten Eingang (22, 28) des zugehörigen Verstärkers (24, 30) angeschlossen ist.

## Beschreibung

Die Erfindung betrifft eine Brückenschaltung zur Abfrage der Schaltstellung (Aus/Ein) eines Schalters und zur Feststellung eines eventuell auftretenden Fehlers der Brückenschaltung, sowie eine Verwendung der Brückenschaltung.

In Industriesteuerungen, insbesondere im Aufzugbau, werden Sicherheitsschalter erfaßt, die Sicherheitsmerkmale während des Betriebes kontrollieren. Im Falle eines geöffneten Schalters werden kritische Handlungen unterbunden. Ein Fehler oder ein fehlendes Sicherheitsmerkmal erzwingt durch Öffnung des Schalters den ungefährlichen Betriebszustand der Anlage; dies ist im Aufzugsbau der stehende Aufzug.

Der Erfindung liegt die Aufgabe zugrunde, eine Brückenschaltung der eingangs genannten Art zu schaffen, die einfach aufgebaut eine Abfrage der Schaltstellung eines Ein/Aus-Schalters, insbesondere Sicherheitsschalters, insbesondere eines Aufzuges, ermöglicht und die außerdem dazu geeignet ist, eventuell auftretende Fehler der Brückenschaltung einfach und zuverlässig festzustellen.

Diese Aufgabe wird erfindungsgemäß durch die Merkmale des Anspruches 1 gelöst. Bevorzugte Aus- bzw. Weiterbildungen der erfindungsgemäßen Brückenschaltung sind in den Unteransprüchen gekennzeichnet. Verwendung findet die erfindungsgemäße Brückenschaltung beispielsweise bei Aufzuganlagen zur Abfrage der Schaltstellung eines entsprechenden Sicherheitsschalters. Eine Aufzuganlage enthält eine Anzahl solcher Sicherheitsschalter, weshalb es zweckmäßig sein kann, eine Anzahl erfindungsgemäßer Brückenschaltungen in einem gemeinsamen Modul zu realisieren.

Die erfindungsgemäße Brückenschaltung ist dadurch gekennzeichnet, daß ein Mikrocontroller einen ersten Ausgang und einen zugehörigen ersten Eingang sowie einen zweiten Ausgang und einen zugehörigen zweiten Eingang aufweist, daß der erste Ausgang mit einem ersten Eingang eines ersten Verstärkers und der zweite Ausgang mit einem ersten Eingang eines invertiert betriebenen zweiten Verstärkers zusammengeschaltet ist, daß der erste und der zweite Verstärker jeweils einen zweiten Eingang aufweisen, die an voneinander verschiedene Referenzgleichspannungen angeschlossen sind, daß jeder der beiden Verstärker ausgangsseitig an eine zugehörige Klemme des abzufragenden Schalters angeschlossen ist, und daß jedem Verstärker ein Optokoppler mit einer Fotodiode und einem Fototransistor zugeordnet ist, wobei die jeweilige Fotodiode an der Ausgangsseite des zugehörigen Verstärkers geschaltet und der zugehörige Fototransistor an den ersten Eingang des zugehörigen Verstärkers angeschlossen ist. Dabei ist zwischen dem ersten Ausgang des Mikrocontrollers und dem zugehörigen ersten Eingang des ersten Verstärkers und zwischen den zweiten Ausgang des Mikrocontrollers und dem zugehörigen ersten Eingang des zweiten Verstärkers vorzugsweise jeweils ein erster Ohm'scher Widerstand eingeschaltet sein. Der jeweilige erste Ohm'sche Widerstand ergibt einen entsprechenden Spannungsabfall, wenn er von einem Strom durchflossen ist.

Vorzugsweise ist zwischen den Ausgang des ersten Verstärkers und die zugehörige Klemme des abzufragenden Schalters und zwischen den Ausgang des zweiten Verstärkers und die zugehörige Klemme des Schalters jeweils ein zweiter Ohm'scher Widerstand eingeschaltet, wobei die jeweilige Fotodiode zum zugehörigen zweiten Ohm'schen Widerstrand parallel geschaltet ist. Wird der jeweilige zweite Ohm'sche Widerstand von einem Strom durchflossen, so ergibt sich an der zugehörigen parallel geschalteten Fotodiode ein entsprechender Spannungsabfall bzw. wird die entsprechende Fotodiode von einem Strom durchflossen, um die Fotodiode zu aktivieren und den damit gekoppelten Fototransistor anzuregen.

Der zum ersten Verstärker zugehörige erste Fototransistor ist vorzugsweise an eine Betriebsspannung angeschlossen und der zum zweiten Verstärker zugehörige zweite Fototransistor gegen Masse geschaltet.

Bei der erfindungsgemäßen Brückenschaltung ist der Mikrocontroller zur Belegung der Brückenschaltung mit unterschiedlichen Prüfmustern programmierbar. Erfindungsgemäß kann die Brückenschaltung mit drei Prüfmustern belegt werden. Dabei wird der abzufragende Schalter in beiden Stromflußrichtungen jeweils mit einem nachfolgenden Passiv-Gegentest überprüft, um eventuell auftretende Fehler der Brückenschaltung festzustellen. Dabei ist der Mikrocontroller vorzugsweise abwechselnd mit passiven und aktiven Prüfmustern programmierbar.

Wie bereits erwähnt worden ist, findet die erfindungsgemäße Brückenschaltung vorzugsweise zur Abfragung der Schaltstellung eines Sicherheitsschalters eines Aufzuges Verwendung.

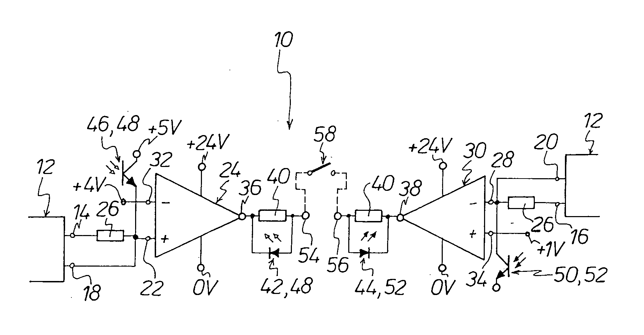

Weitere Einzelheiten, Merkmale und Vorteile ergeben sich aus der nachfolgenden Beschreibung eines in der Zeichnung dargestellten Schaltungsbeispieles der erfindungsgemäßen Brückenschaltung zur Abfrage der Schaltstellung eines Ein/Aus-Schalters und zur Feststellung eines eventuell auftretenden Fehlers der Brückenschaltung.

Die Figur zeigt eine Brückenschaltung 10 mit einem Mikrocontroller 12, der schematisch zweigeteilt verdeutlicht ist. Der Mikrocontroller 12 weist einen ersten Ausgang 14, einen zweiten Ausgang 16, einen zum ersten Ausgang 14 zugehörigen ersten Eingang 18 und einen zum zweiten Ausgang 16 zugehörigen zweiten Eingang 20 auf.

Der erste Ausgang 14 des Mikrocontrollers 12 ist mit einem ersten Eingang 22 eines ersten Verstärkers 24 zusammengeschaltet, wobei zwischen dem ersten Ausgang 14 und dem ersten Eingang 22 ein erster Ohm'scher Widerstand 26 eingeschaltet ist.

Entsprechend ist der zweite Ausgang 16 des Mikrocontrollers 12 mit einem ersten Eingang 28 eines zweiten Verstärkers 30 zusammengeschaltet, wobei zwischen dem zweiten Ausgang 16 und dem ersten Eingang 28 ebenfalls ein erster Ohm'scher Widerstand 26 eingeschaltet ist.

Der zweite Verstärker 30 wird in bezug zum ersten Verstärker 24 invertiert betrieben.

Der erste Verstärker 24 weist einen zweiten Eingang 32 und der zweite Verstärker weist einen zweiten Eingang 34 auf. Die beiden zweiten Eingänge 32 und 34 sind an voneinander verschiedene Referenzgleichspannungen angeschlossen. Beispielsweise ist der zweite Eingang 32 an +4V und der zweite Eingang 34 an +1V angeschlossen.

Der erste Verstärker 24 weist einen Ausgang 36 und der zweite Verstärker 30 weist einen Ausgang 38 auf. An den Ausgang 36 ist ein zweiter Ohm'scher Widerstand 40 und an den Ausgang 38 ist ebenfalls ein zweiter Ohm'scher Widerstand 40 angeschlossen. Zum jeweiligen zweiten Ohm'schen Widerstand 40 ist eine Fotodiode 42, 44 parallelgeschaltet. Der Fotodiode 42 am Ausgang 36 ist ein Fototransistor 46 zugeordnet, so daß die Fotodiode 42 und der Fototransistor 46 einen Optokoppler 48 bilden. Entsprechend ist die Fotodiode 44 am Ausgang 38 mit einem Fototransistor 50 gekoppelt, um einen Optokoppler 52 zu bilden.

Die am Ausgang 36 des ersten Verstärkers 24 vorgesehene Parallelschaltung aus zweitem Ohm'schen Widerstand 40 und Fotodiode 42 ist an eine Klemme 54 und die an den Ausgang 38 des zweiten Verstärkers 30 angeschlossene Parallelschaltung aus zweitem Ohm'schen Widerstand 40 und Fotodiode 44 ist an eine zweite Klemme 56 angeschlossen. Die Klemmen 54 und 56 sind zum Anschluß eines Prüflings, d.h. eines abzufragenden Schalters 58 vorgesehen. Das ist durch die dünnen strichlierten Linien schematisch verdeutlicht.

Die beiden Verstärker 24 und 30 sind beispielsweise zwischen einer System- oder Logikspannung und Masse eingeschaltet. Bei der System- oder Logikspannung kann es sich beispielsweise um +24V handeln.

Der Fototransistor 46 des Optokopplers 48 ist an den ersten Eingang 22 des ersten Verstärkers 24 angeschlossen, er wird beispielsweise mit +5V betrieben. Der Fototransistor 50 des zum zweiten Verstärker 30 zugehörigen Optokopplers 52 ist mit dem ersten Eingang 28 des invertieret betriebenen zweiten Verstärkers 30 angeschlossen und gegen Masse, d.h. 0V, geschaltet.

Die in der Zeichnung dargestellte und selbstverständlich nicht auf die angegebenen Gleichspannungen beschränkte Brückenschaltung 10 kann mit drei Prüfmustern belegt werden. Dabei wird der zu prüfende Schalter 58 in beiden Stromflußrichtungen jeweils mit einem nachfolgenden Passiv-Gegentest überprüft. Die daraus resultierenden vier Testphasen, die nachfolgend detaillierter beschrieben werden, werden pro Prüfling, d.h. pro zu überprüfendem Schalter 58, abwechselnd durchlaufen. Als Ergebnis dieser vier Testphasen werden sicher und zuverlässig sowohl der offene Schalter 58, der geschlossene Schalter 58 als auch ein eventuell auftretender Fehler der Brückenschaltung 10 erkannt.

Die Brückenschaltung 10 ist fast symmetrisch, der zweite Verstärker 30 wird jedoch im Vergleich zum ersten Verstärker 24 invertiert betrieben, um unzulässige Schlüsse der Signale des Mikrocontrollers 12, untereinander verbessert zu erkennen.

Bei den oben erwähnten vier Testphasen handelt es sich:
1. passive Phase 1 (= Test der Meßanordnung; Selbstkontrolle)
   Ansteuerung: erster Ausgang 14 auf LOW = 0V
   zweiter Ausgang 16 des Mikrocontrollers 12 auf HIGH (=+5V).
   Der Mikrocontroller 12 kann die Potentiale an den Ausgängen 14 und 16 zur Kontrolle zurücklesen.
   - Beide Klemmen 54 und 56 werden nach 0V gesteuert;
   - beide Optokoppler 48 und 52 sollten stromlos bleiben, d.h. selbst wenn der Schalter 58 geschlossen ist, fließt kein Strom;
   - Erwartete Antwort an dem ersten Eingang 18 des Mikrocontrollers 12 = LOW (nicht aktiv),
   erwartete Antwort an dem zweiten Eingang 20 des Mikrocontrollers 12 = HIGH (nicht aktiv).
   Die passive Phase 1 bemerkt also
   - Schlüsse oder Ströme zu den Klemmen 54 oder 56 von Spannungen >1,5 V;
   - kurz geschlossene Optokoppler-Ausgänge;
   - Fehlerströme z.B. aus dem Verstärker 24, 30 oder Fehlerströme durch deffekte Optokoppler 48, 52 gegenüber dem passiven Eingangspotential am ersten oder zweiten Eingang 18, 20, welche die künftige Messungen verfälschen würden;
   - Mikrocontroller-Eingänge 18, 20 mit Erkennungs-Defekten für das passive Eingangspotential an beiden Brückenseiten.
2. Prüfphase 1 (Messung an Klemme 56, wenn die Klemme 54 positiv gesteuert wird).
   Diese Phase ist die erste Meßphase.
   Ansteuerung: Der erste Ausgang 14 wird auf HIGH = +5V gesteuert;
   Der zweite Ausgang 16 des Mikrocontrollers 12 bleibt auf HIGH =+5V.
   Der Mikrocontroller 12 kann die Potentiale an den Ausgängen 14, 16 zur Kontrolle zurücklesen.
   - Die Brückenschaltung 10 steuert an der Klemme 54 auf +24V; die Klemme 56 bleibt unverändert auf 0V gesteuert;
   - der Optokoppler 52 mißt an der Klemme 56 gegen 0V den Schalterstrom, und auf dem zweiten Eingang 20 des Mikrocontrollers 12 wird die folgende Reaktion erwartet:
   - Geht der zweite Eingang 20 des Mikrocontrollers 12 innerhalb der Reaktionszeit auf LOW, so ist das erste Kriterium für einen geschlossenen Schalter 58 erfüllt;
   - bleibt der zweite Eingang 20 des Mikrocontrollers 12 auf HIGH, so gilt der Schalter 58 als offen;
   - der ansprechende Optokoppler begrenzt als Nebenfunktion bei einem geschlossenen Schalter 58 den Strom durch die Brückenschaltung 10; die Treiber bleiben damit im definierten Arbeitsbereich;
   - da ansteuerndes und erwartetes Signal zueinander invers sind, werden Überbrückungen im Mikrocontrollerbereich und in der Brückenschaltung 10 sicher ausgeschlossen.
   - Der erste Eingang 18 des Mikrocontrollers 12 muß auf HIGH-Potential bleiben.

   Überbrückungen der beiden Eingänge 18 und 20 gegeneinander und Fehler am Optokoppler 48 werden durch diese Prüfphase, d.h. Kontrolle, erkannt.
3. Passive Phase 2 (Gegentest; entspricht der passiven Phase 1)
   Diese passive Phase 2 wird vor der zweiten Messung identisch wiederholt, d.h.
   Ansteuerung: Erster Ausgang 14 auf LOW = 0V
   Zweiter Ausgang 16 des Mikrocontrollers 12 auf HIGH = +V5.
4. Prüfphase 2 (Messung an der Klemme 54, wenn die Klemme 56 positiv gesteuert wird)
   Diese Prüfphase 2 ist die zweite Meßphase in zur Prüfphase 1 umgekehrter Stromrichtung.
   Ansteuerung: Der erste Ausgang 14 des Mikrocontrollers 12 bleibt auf
   LOW = 0V,
   der zweite Ausgang 16 des Mikrocontrollers 12 wird auf LOW =0V gesteuert.
   Der Mikrocontroller 12 kann die Potentiale an den Ausgängen 14 und 16 zur Kontrolle zurücklesen.
   - Die Brückenschaltung 10 steuert an der zweiten Klemme 56 auf +24V; die Klemme 54 bleibt unverändert auf 0V gesteuert.
   - Der Optokoppler 48 mißt an der Klemme 54 gegen 0V den Schalterstrom und am ersten Eingang 18 des Mikrocontrollers 12 wird die folgende Reaktion erwartet:
   - Geht der erste Eingang 18 innerhalb der Reaktionszeit auf HIGH, so ist das zweite Kriterium für einen geschlossenen Schalter 58 erfüllt;
   - bleibt der erste Eingang 18 des Mikrocontrollers LOW; so gilt der Schalter 58 als offen;
   - nur wenn beide Prüfphasen gemäß Punkt 2 und gemäß Punkt 4 übereinstimmend einen geschlossenen Schalter 58 erkennen, wird dieser als geschlossen weiter verarbeitet;
   - der ansprechende Optokoppler begrenzt als Nebenfunktion bei einem geschlossenen Schalter 58 den Strom durch die Brückenschaltung 10, die Treiber bleiben damit im definierten Arbeitsbereich;
   - da ansteuerndes und erwartetes Signal invers zueinander sind, werden Überbrückungen im Mikrocontrollerbereich und in der Brückenschaltung 10 sicher ausgeschlossen.
   - Der zweite Eingang 20 des Mikrocontrollers 12 muß auf LOW-Potential bleiben, Überbrückungen der beiden Eingänge 18 und 20 gegeneinander und Fehler am Optokoppler 52 werden in dieser zweiten Prüfphase, d.h. durch diese Kontrolle, erkannt.

Die mit der erfindungsgemäßen Brückenschaltung 10 erzielten Vorteile bestehen darin:

Die Brückenschaltung kann sicher alle denkbaren Brücken und Verkopplungen von einem geschlossenen Prüfling, d.h. von einem eingeschalteten Schalter 58, unterscheiden. Der Schalter 58 wird in beiden Stromrichtungen mit unterschiedlichen Sensoren getestet. Das Feedback für einen geschlossenen Schalter 58 ist zu allen Ansteuersignalen entgegengesetzt.

Alle Messungen erfolgen mittels Optokoppler gegen 0V. Deshalb müssen Fehlerströme oder Schlüsse der Ausgänge 14 und 16 nach 0V hin nicht betrachtet werden, weil sie maximal zu einer Fehlerkennung eines ungefährlichen Zustandes eines geöffneten Schalters 58 führen können. Ein weiterer Vorteil besteht darin, daß Kreuzverbindungen der Schalterbrücken untereinander durch Ansteuerung mit wechselnd versetzten Phasen erkannt werden.

## Patentansprüche

1. Brückenschaltung zur Abfrage der Schaltstellung (Aus/Ein) eines Schalters (58) und zur Feststellung eines eventuell auftretenden Fehlers der Brückenschaltung (10),
**dadurch gekennzeichnet,**
**daß** ein Mikrocontroller (12) einen ersten Ausgang (14) und einen zugehörigen ersten Eingang (18) sowie einen zweiten Ausgang (16) und einen zugehörigen zweiten Eingang (20) aufweist, daß der erste Ausgang (14) mit einem ersten Eingang (22) eines ersten Verstärkers (24) und der zweite Ausgang (16) mit einem ersten Eingang (28) eines invers betriebenen zweiten Verstärkers (30) zusammengeschaltet ist, daß der erste und der zweite Verstärker (24, 30) jeweils einen zweiten Eingang (32, 34) aufweisen, die an voneinander verschiedene Referenzgleichspannungen angeschlossen sind, daß jeder der beiden Verstärker (24, 30) ausgangsseitig an eine zugehörige Klemme (54, 56) für den Schalter (58) angeschlossen ist, und daß jedem Verstärker (24, 30) ein Optokoppler (48, 52) mit einer Fotodiode (42, 44) und einem Fototransistor (46, 50) zugeordnet ist, wobei die jeweilige Fotodiode (42, 44) an den Ausgang (36, 38) des zugehörigen Verstärkers (24, 30) und der jeweils zugehörige Fototransistor (46, 50) an den entsprechenden ersten Eingang (18, 20) des zugehörigen Verstärkers (24, 30) angeschlossen ist.

2. Brückenschaltung nach Anspruch 1,
**dadurch gekennzeichnet,**
**daß** zwischen dem ersten Ausgang (14) des Mikrocontrollers (12) und dem zugehörigen ersten Eingang (22) des ersten Verstärkers (24) und zwischen dem zweiten Ausgang (16) des Mikrocontrollers (12) und dem zugehörigen ersten Eingang (28) des zweiten Verstärkers (30) jeweils ein erster Widerstand (26) eingeschaltet ist.

3. Brückenschaltung nach Anspruch 1,
**dadurch gekennzeichnet,**
**daß** zwischen dem Ausgang (36) des ersten Verstärkers (24) und die zugehörige Klemme (54) für den Schalter (58) und zwischen dem Ausgang (38) des zweiten Verstärkers (30) und die zugehörige Klemme (56) für den Schalter (58) jeweils ein zweiter Widerstand (40) eingeschaltet ist, wobei die jeweilige Fotodiode (42, 44) zum zugehörigen zweiten Widerstand (40) parallel geschaltet ist.

4. Brückenschaltung nach Anspruch 1,
**dadurch gekennzeichnet,**
**daß** der zum ersten Verstärker (24) zugehörige erste Fototransistor (46) an eine Betriebsspannung angeschlossen und daß der zum zweiten Verstärker (30) zugehörige zweite Fototransistor (50) gegen Masse geschaltet ist.

5. Brückenschaltung nach einem der Ansprüche 1 bis 4,
**dadurch gekennzeichnet,**
**daß** der Mikrocontroller (12) zur Belegung der Brückenschaltung (10) mit unterschiedlichen Prüfmustern programmierbar ist.

6. Brückenschaltung nach Anspruch 5,
**dadurch gekennzeichnet,**
**daß** der Mikrocontroller (12) abwechselnd mit passiven und aktiven Prüfmustern programmierbar ist.

7. Verwendung der Brückenschaltung nach einem der vorhergehenden Ansprüche zur Abfrage der Schaltstellung eines Sicherheitsschalters eines Aufzuges.
